# EUROPÄISCHE PATENTSCHRIFT

(11) **EP 0 443 360 B1**
(45) Veröffentlichungstag und Bekanntmachung des Hinweises auf die Patenterteilung: **06.07.1994**
(21) Anmeldenummer: 91101483.5
(22) Anmeldetag: 05.02.1991
(51) Int. Cl.: F16D 65/02, F16D 55/00, F16D 69/00

(54) **Bremsbelag für Teilbelagscheibenbremsen mit einer Bremsscheibe, insbesondere von Schienenfahrzeugen.**
Brake pad for spot-type disc brakes with a brake disc, especially for railway vehicles
Garniture de frein pour freins à disque à garniture partielle avec disque de frein, spécialement de véhicules ferroviaires

(30) Priorität: 13.02.1990 DE 9001661 U
(43) Veröffentlichungstag der Anmeldung: 28.08.1991
(73) Patentinhaber: AlliedSignal Bremsbelag GmbH, 21509 Glinde (DE)
(72) Erfinder: Bauer, Heinz, Dipl.-Ing., W-2056 Glinde (DE)
(74) Vertreter: Richter, Werdermann & Gerbaulet

(56) Entgegenhaltungen:
- DE-A- 1 430 869
- DE-U- 8 905 731
- FR-A- 842 684
- FR-A- 2 415 239
- GB-A- 360 548
- GB-A- 2 073 834
- US-A- 4 823 921

## Beschreibung

Die Erfindung geht aus von einem Bremsbelag für Teilbelagscheibenbremsen mit einer Bremsscheibe, bei dem auf der der Rückseite gegenüberliegenden und für den Kontakt mit der Bremsscheibe der Scheibenbremse vorgesehenen Vorderseite Wasserabführungseinrichtungen vorgesehen sind, wozu der Bremsbelag mit einer Anzahl von jeweils zueinander einen Abstand aufweisenden, sich von der Vorderseite des Bremsbelages bis zu dessen Rückseite durchgehend erstreckenden, zur Aufnahme und Abführung von reibungshindernden Verschmutzungen wie Wasser, Eis, Abrieb od.dgl. geeigneten Durchbrechungen versehen ist. Ein solcher Bremsbelag ist insbesondere für Schienenfahrzeuge vorgesehen und ggf. mit einer Schwalbenschwanzführung für einen Belagträger auf einer Rückseite versehen.

Ein derartiger Bremsbelag ist beispielsweise aus dem DE-U-89 05 731 bekannt. Um bei Reibungsbremsen, speziell im Winter und bei starker Nässeeinwirkung zwischen Bremsbelag und Bremsscheibe eingetretenes Wasser oder eine gebildete Eisschicht zu entfernen und Fading zu vermeiden, wird bei diesem bekannten Bremsbelag vorgeschlagen, daß die beiden Enden eines Bremsbelages vorhandenen Anstellflächen in mehrere gerade Teilflächen aufgeteilt sind, welche sich über den gesamten Eingriffsbereich des Bremsbelags auf der Bremsscheibe erstrecken und welche einen Winkel Alpha von weniger als 90° zur Reibfläche der Bremsscheibe bilden.

Hierbei wird davon ausgegangen, daß Bremsbeläge heute mehr oder weniger formstabil ausgebildet sind und die Randflächen in einem Winkel von 90° zur Reibfläche der Bremsscheibe stehen.

Andererseits ist es bereits bekannt, daß die Rezepturen für den Bremsbelag, der aus einem geeigneten Reibmaterialwerkstoff als Verbundwerkstoff besteht, so gewählt werden können, daß eine gezielte Thermo-Elastizität erreicht werden kann, und zwar beispielsweise durch
- eine geeignete Bindemittelkombination oder
- entsprechende Maßnahmen bei der Verarbeitung (Preßtemperatur; Preßdruck; Verteilung des Preßgutes, Härtezyklen usw.).

Die positive Wirkung dieser Maßnahmen wurde bei den bekannten Bremsbelägen jedoch teilweise aufgehoben durch die heute bekannten Ausführungsformen der Bremsbeläge, bei denen auf der Vorderseite im Bereich der vorgesehenen Berührungsfläche Bremsbelag/Bremsscheibe Nuten, die zur Bremsscheibendrehrichtung tangential bzw. radial verlaufen, vorgesehen sind und zur Abführung von bremshindernden Verschmutzungen wie Wasser, Eis, Abrieb u.dgl. dienen.

Aus der DE-A-14 30 869 ist bereits ein Bremsbelag für Teilbelagscheibenbremsen bekannt, der einteilig ausgebildet ist, wobei auf der der Rückseite gegenüberliegenden und für den Kontakt mit der Bremsscheibe der Scheibenbremse vorgesehenen Vorderseite Wasserabführungseinrichtungen vorgesehen sind, wozu der Bremsbelag mit sich von der Vorderseite des Bremsbelages bis zu dessen Rückseite durchgehend erstreckenden, zur Aufnahme von reibungshindernden Verschmutzungen, wie Wasser od.dgl. geeigneten Durchbrechungen versehen ist.

Aus der DE-U-89 05 731 ist es bereits bekannt, einen Bremsbelag für Teilbelagscheibenbremsen, insbesondere für Schienenfahrzeuge, ein- oder mehrteilig auszubilden, der etwa Nierenform besitzt und ggf. mit einer Schwalbenschwanzführung auf einem Bremsbelagträger befestigbar ist.

Es ist daher Aufgabe vor vorliegenden Erfindung, einen Bremsbelag der eingangs genannten Art so weiterzubilden, daß einerseits die erzielbare Thermo-Elastizität, d.h., die unter Einfluß von Wärme erzielbare vorherbestimmte Verformung beibehalten und eingesetzt werden kann und daß andererseits eine Abführung eingetretener bremshindernder Verschmutzungen wie Wasser, Eis u.dgl. sicher möglich ist.

Die Aufgabe wird durch einen Bremsbelag mit den in Anspruch 1 gekennzeichneten Merkmalen gelöst.

Erfindungsgemäß werden drei Lösungsalternativen vorgeschlagen, die in ihrer technischen Wirkung zum gleichen Ergebnis führen.

Erfindungsgemäß wird bei einem Bremsbelag für Teilbelagscheibenbremsen mit einer Bremsscheibe, insbesondere von Schienenfahrzeugen, der ggf. mit einer Schwalbenschwanzführung für einen Belagträger auf einer Rückseite versehen ist, wobei auf der der Rückseite gegenüberliegenden und für den Kontakt mit der Bremsscheibe der Scheibenbremse vorgesehenen Vorderseite Wasserabführungseinrichtungen vorgesehen sind, wobei der Bremsbelag mit mindestens einer sich von der Vorderseite des Bremsbelages bis zu dessen Rückseite durchgehend erstrekkenden, zur Aufnahme und Abführung von reibungshindernden Verschmutzungen wie Wasser, Eis, Abrieb od.dgl. geeigneten Durchbrechungen versehen ist, vorgesehen, daß der Belag ein- oder mehrteilig und etwa kreisringsegmentförmig ausgebildet ist und daß nach einer 1. Alternative als Minimum auf der Vorderseite des Bremsbelages auf jeder beliebigen von den sich um den Kreismittelpunkt des kreisringförmig ausgebildeten Belages ergebenden, durch von dem gemeinsamen Kreismittelpunkt ausgehende und sich gleichmäßig vergrößernde Radien definierte Kreisringlinien mindestens 30 % jeweils mindestens eine der vorgesehenen Durchbrechungen schneiden oder berühren. Maximal soll ein Überdeckungsgrad der Durchbrechungen von 150 % bestehen, bei dem jede denkbare Kreisringlinie mindestens eine Durchbrechung berührt oder schneidet, so daß jeder auf einer beliebigen Kreisringlinie eintretende Wassertropfen einer Durchbrechung zugeführt wird.

Als weitere Alternativen ist vorgesehen, daß sich die Fläche der Öffnungen der Durchbrechungen auf der Vorderseite des Bremsbelages zu der gesamten Vorderseitenfläche einschließlich der Fläche der Öffnungen der Durchbrechungen in einer Relation zwischen 2:100 (Minimum) und 35:100 (Maximum) verhält, daß auf der Vorderseite des Bremsbelages jede beliebige Kreisringlinie pro 150 mm Kreislinienlänge mindestens eine Durchbrechung und maximal fünf Durchbrechungen schneidet oder berührt.

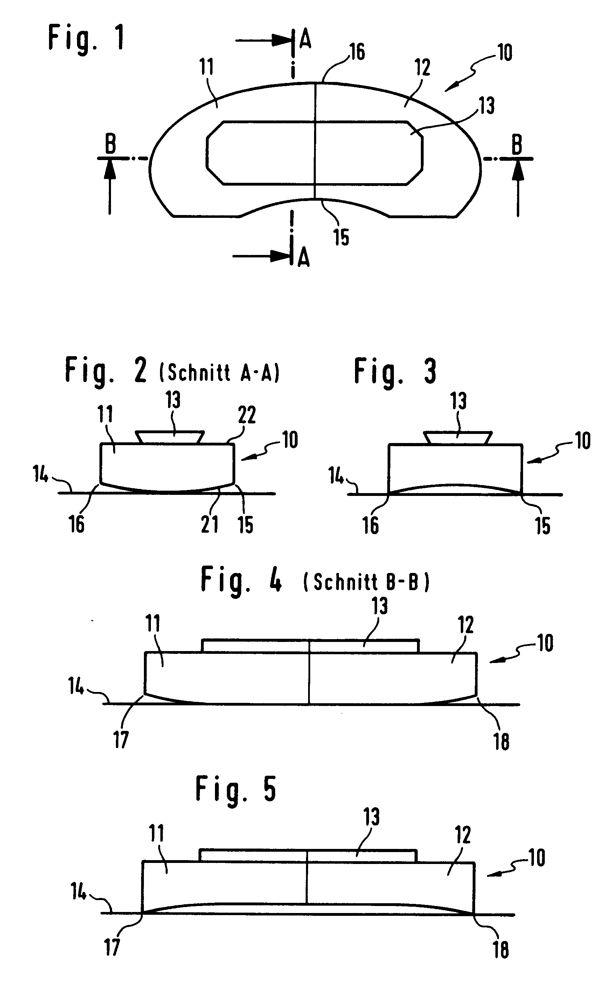

Bei diesem Bremsbelag besteht die ideale Ausführungsform in einer geschlossenen Belagform, die also nicht geteilt ist und die vor allem keine Nuten als Oberflächeneinziehungen o.dgl. aufweist. Hierbei kommt nämlich der thermoelastische Effekt voll zur Geltung, wobei dieser thermoelastische Effekt, der als an sich bekannt vorausgesetzt wird, anhand der Figuren 1 bis 5 nachstehend erläutert wird.

In Fig. 1 ist mit 10 ein Bremsbelag bezeichnet, der aus zwei Hälften 11 und 12 besteht, die zueinander spiegelsymmetrisch ausgebildet sind. Im Idealfall ist der Bremsbelag 10 für die nachstehenden Betrachtungen einteilig. Bei der in der Zeichnung dargestellten Ausführungsform sind die den Bremsbelag 10 bildenden Hälften 11 und 12 an einer Schwalbenschwanzführung 13 so angeordnet, daß ein einteiliger Belag gebildet wird. Wie sich aus den Schnittdarstellungen gemäß Fig. 2 bis 5 ergibt, nimmt der Bremsbelag 10 bei warmem bzw. heißem Belag und einer entsprechend heißen Bremsscheibe 14 die in den Fig. 2 und 4 dargestellte konvexe Form ein, bei der die kreisbogenabschnittförmige Innenkante 15 und die kreisbogenabschnittförmige Außenkante 16 und die Anstellkanten bzw. -flächen 17 und 18 von der Bremsscheibe 14 zurückgezogen und zu dieser einen kleinen Abstand aufweisend angeordnet sind. Dabei sind in der Zeichnung Kanten 15-18 dargestellt, wobei sich diese bei zunehmendem Verschleiß als Anstell- bzw. Randflächen ergeben.

Wenn nun der Belag 10 abkühlt und auch die Scheibe 14 abgekühlt ist, nimmt der Belag 10 die in den Fig. 3 und 5 dargestellte konkave Ausformung an, bei der die Kanten 15-18 auf der Bremsscheibe aufliegen. Insbesondere durch die Anstellkanten 17 und 18 ist es möglich, bei einer Drehung der Bremsscheibe 14 praktisch über die gesamte Belagbreite durch diese mit hohem Druck anpreßbare Kanten bzw. Flächen eine Eisschicht auf der Reibfläche der Bremsscheibe zu entfernen und einen Wassereintritt in den sich ergebenden Zwischenraum zwischen Bremsscheibenreibfläche und Bremsbelag großteils zu verhindern.

Es stellt sich daher im kalten Betriebszustand sozusagen eine selbstreinigende konkave Verformung des Belages ein, wobei mit steigender Belagtemperatur diese konkave Form in die voranstehend angesprochene konvexe Form übergeht. Durch die gezielte Ausnutzung der thermoelastischen Spannungsunterschiede im Belag ist sichergestellt, daß sich die entsprechenden Kanten immer wieder erneuern. Ein Nachteil einer solchen Ausführung ist es jedoch, daß ein feiner Wasserfilm, welcher zwischen den Belag und die Bremsscheibe gelangt und trotz der selbstreinigenden Ausformung nicht ganz ausgeschlossen werden kann, die Bremswirkung nachteilig beeinflussen kann.

Es ist daher Ziel der vorliegenden Erfindung, den thermoelastischen Effekt voll auszunutzen und trotzdem den möglichen Wasserfilm unter der Belagoberfläche zu beseitigen. Hierzu ist erfindungsgemäß vorgesehen, daß sich von der Vorderseite des Bremsbelages bis zu dessen Rückseite durchgehend erstreckende zur Aufnahme und Abführung von reibungshindernden Verschmutzungen wie Wasser, Eis, Abrieb u.dgl. geeignete und erfindungsgemäß angeordnete Durchbrechungen in dem Bremsbelag vorgesehen sind.

Es kann dabei zusätzlich eine Durchbrechung langlochartig und sich in Längsrichtung radial in bezug auf den Kreismittelpunkt des kreisförmig ausgebildeten Belages erstreckend vorgesehen sein, jedoch sind erfindungsgemäß eine Anzahl von jeweils zueinander einen Abstand aufweisende Durchbrechungen vorgesehen.

Ein weiterer Vorteil ergibt sich bei einer geeigneten Rezepturauswahl zur Erreichung des thermoelastischen Effektes in Verbindung mit einer geeigneten Anordnung der Durchbrechungen und Auswahl einer geeigneten Durchbrechungsgestaltung, da hierdurch das thermoelastische Verhalten weitgehenst steuerbar ist. Auf diese Weise können unterschiedliche Reibwerkstoffe auf die verschiedensten Anwendungsbereiche optimal abgestimmt werden. Diese Abstimmung zielt nicht nur auf das beschriebene Naßverhalten, sondern auch auf das Vermeiden von sog. Brandflecken auf der Bremsscheibe.

So ist erfindungsgemäß vorgesehen, daß auf der Vorderseite des Bremsbelages von den sich um den Kreismittelpunkt des kreisringförmig ausgebildeten Belages ergebenden Kreisringlinien mindestens 30 % jeweils mindestens eine der vorgesehenen Durchbrechungen schneiden oder berühren. Alternativ oder ergänzend sollte sich die Fläche der Öffnungen der Durchbrechungen auf der Vorderseite des Bremsbelages zu der gesamten Vorderseitenfläche einschließlich der Fläche der Öffnungen der Durchbrechungen in einer Relation zwischen 2:100 (Minimum) und 35:100 (Maximum) verhalten, wobei die Aordnung so vorgesehen sein sollte, daß auf der Vorderseite des Bremsbelages jede sich um den Kreismittelpunkt des kreisringförmig ausgebildeten Belages ergebende Kreisringlinie pro 150 mm Kreislinienlänge mindestens eine Durchbrechung und maximal fünf Durchbrechungen schneidet oder berührt.

Mit dieser Anordnung und Verteilung der Durchgangsdurchbrechungen im Belag ist es möglich, auf der Bremsscheibe befindliche Verschmutzungen wie Wasser o.dgl. nach Eintritt in die Berührungsfläche zwischen dem Bremsbelag und der Bremsscheibe über die Durchbrechungen abzuführen, da diese so angeordnet sind, daß sich auf jeder Kreisringbahn mindestens eine Durchbrechung befindet oder diese so nah an der Kreisringbahn angeordnet ist, daß unter Einfluß des Anpreßdruckes das Wasser in eine Durchbrechung hineingedrückt und von dieser abgeführt wird. In bezug auf die Kreisringbahnen können dabei die Anordnung und die Ausdehnung der Durchbrechungen so gewählt werden, daß ein optimaler Überdeckungsgrad erreichbar ist. Dieser muß zur Aufrechterhaltung einer Abführung von eingetretenen Verschmutzungen mindestens 30 % betragen und kann im Maximum und zur Erreichung einer optimalen Sicherheit 150 % betragen. Höhere Werte sind dabei nicht von Nutzen, da davon auszugehen ist, daß bei einem derartigen Überdekkungsgrad alle eintretenden Verschmutzungen abführbar sind. Ein höherer Überdeckungsgrad würde jedoch zu einer zu starken Schwächung des Reibbelages und insbesondere der Thermo-Elastizität führen.

Die einzelne Durchbrechung kann dabei verschiedenste Formen aufweisen, wobei eine bevorzugte Ausführungsform darin besteht, daß die Durchbrechung als Durchgangsbohrung mit einem gleichbleibenden Querschnitt bei einem Durchmesser zwischen 6 mm und 30 mm ausgebildet ist. Gemäß einer bevorzugten Ausführungsform zur Erzielung optimaler Thermo-Elastizität kann jedoch auch vorgesehen werden, daß die Durchbrechung als von der Vorderseite eingebrachte Sacklochbohrung mit einem gleichbleibenden Querschnitt bei einem Durchmesser zwischen 6 mm und 30 mm ausgebildet ist, wobei das Sacklochbohrungsende mit einem gegenüber der Sacklochbohrung schmaleren Abführungs- und Entlüftungskanal, der auf der Rückseite des Bremsbelages austritt, verbunden ist.

Um die Oberfläche in der Durchbrechung in bezug auf ihren Querschnitt möglichst groß zu gestalten, um eine möglichst gute Aufnahme, insbesondere von Tauwasser zu erreichen, kann vorgesehen sein, daß die Durchbrechung einen sternförmigen, elliptischen oder anderen oberflächenvergrößernden Querschnitt aufweist. Unabhängig von der Querschnittsform im Eintrittsbereich kann dabei vorgesehen sein, daß die Durchbrechung von der Vorderseite zur Rückseite einen sich kontinuierlich verändernden Querschnitt aufweist, wobei eine bevorzugte Ausführungsform in einer konischen Gestaltung der Durchbrechung besteht.

Weitere bevorzugte Ausführungsformen sind in den Unteransprüchen gekennzeichnet.

Ausführungsbeispiele der Erfindung werden nachstehend anhand der Zeichnung näher erläutert. Es zeigen
**Fig.** 1 bis 5 in einer Vorderansicht und in Schnittdarstellungen rein schematisch einen Bremsbelag mit einer angedeuteten Bremsscheibe in kaltem und warmem Betriebszustand,
**Fig**. 6 in einer rein schematischen Ansicht von oben einen Bremsbelag mit erfindungsgemäßen Durchbohrungen,
**Fig.** 7 in einer Schnittdarstellung gem. Linie VII-VII in Fig. 6 den Bremsbelag mit einer angedeuteten Langlochdurchbrechung,
**Fig.** 8 in einer schematischen Ansicht von oben einen Bremsbelagteil mit einem Anordnungsschema für die erfindungsgemäßen Durchbrechungen,
**Fig.** 9 in einer Ansicht von oben eine weitere Ausführungsform eines Bremsbelages,
**Fig.** 10 in einer senkrechten Schnittdarstellung gem. A-A in Fig. 9 den Bremsbelag gem. Fig. 9,
**Fig.** 11 in einer Teildarstellung eine weitere Ausführungsform einer Durchbrechung und
**Fig.** 12 in einer Teildarstellung eine weitere Ausführungsform einer Durchbrechung.

In den Figuren 1 bis 5 ist anhand eines Bremsbelages 10, der aus den Bremsbelaghälften 11 und 12 besteht und an einer Schwalbenschwanzhalterung 13 angeordnet ist, das thermoelastische Verhalten und die Verformung gegenüber eine Bremsscheibe 14 dargestellt, wobei aufgrund der konkaven Ausformung des Bremsbelages 10 bei kaltem Betriebszustand die Innenkante 15 und die Aussenkante 16 sowie die Anstellkanten 17,18 auf die Bremsscheibe 14 aufgepreßt werden, während bei warmem Betriebszustand der Bremsbelag 10 eine konvexe Ausformung annimmt und die genannten Kanten und Flächen von der Bremsscheibe 14 abhebt, wie dies in den Fig.3 bis 5 dargestellt ist.

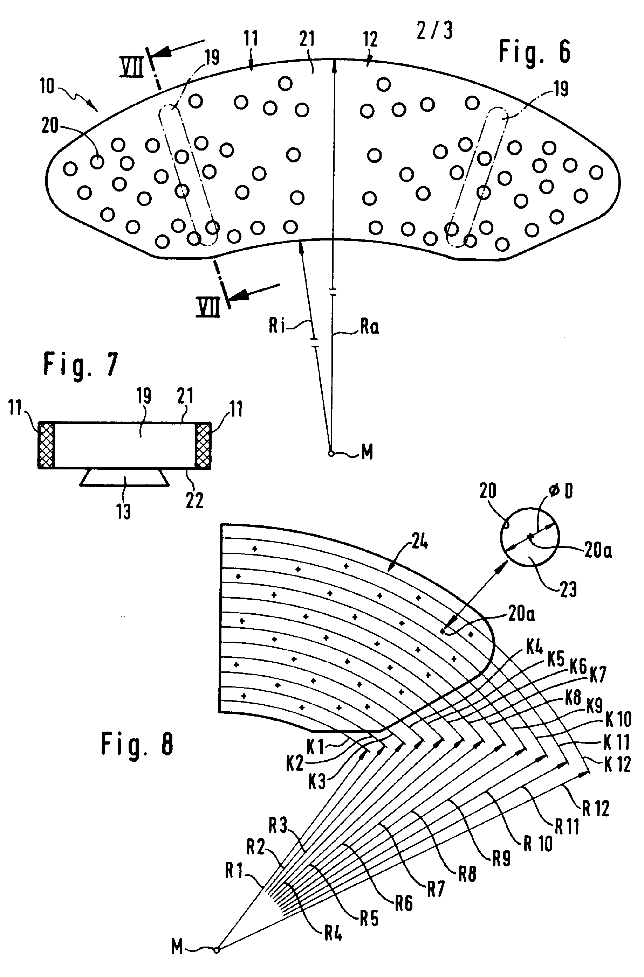

In Fig.6 ist ein Bremsbelag 10 anhand seiner kreisringförmigen Kontur dargestellt, bei dem die zueinander spiegelsymmetrischen Hälften mit 11 bzw. 12 bezeichnet sind, der jedoch auch einstückig ausgebildet sein kann. Der Bremsbelag 10 kann dabei mit den in Fig.6 gestrichelt dargestellten Durchbrechungen 19, von denen eine in Fig.7 im Schnitt dargestellt ist, versehen sein. Es kann jedoch alternativ oder ergänzend vorgesehen sein, daß der Bremsbelag 10 Durchbrechungen 20 aufweist, die sich von der Vorderseite 21 des Bremsbelages 10 bis zu dessen Rückseite 22 durchgehend erstrecken. Diese dienen zur Aufnahme und Abführung von reibungshindernden Verschmutzungen wie insbesondere Wasser, Eis u.dgl.. Der Bremsbelag 10 kann dabei mit einer Schwalbenschwanzhalterung 13 versehen sein, wie dies in Fig.7 angedeutet ist. Die Anordnung der dargestellten Durchbrechungen wurde dabei so vorgenommen, daß sich sinnvolle Durchtrittsstellen durch die Schwalbenschwanzhalterung ergeben. Es kann jedoch auch vorgesehen sein, den Bremsbelag 10 auf einer an sich bekannten und in der Zeichnung nicht dargestellten Trägerplatte anzuordnen, wobei in diesem Fall die Durchbrechungen 20 dann auch durch die nicht dargestellte Trägerplatte hindurchgehen.

Der Bremsbelag 10 hat dabei eine kreisringförmige Ausbildung, deren Außenradius Ra und deren Innenradius Ri beispielsweise von einem gemeinsamen Mittelpunkt M ausgehen, der dem Achsmittelpunkt der Drehachse einer nicht dargestellten Bremsscheibe entspricht.

In Fig. 8 ist dabei die vorgesehene Anordnung der einzelnen Bohrungen 20 angedeutet, wobei lediglich die Durchbrechungsmittelpunkte 20a der Durchbrechungen 20 in Fig.8 angegeben sind. Die Anordnung der Durchbrechungen 20 definiert sich dabei im Hinblick auf Kreisringlinien K1-K12, die durch von dem gemeinsamen Mittelpunkt M ausgehende und sich gleichmäßig vergrößernde Radien R1-R12 definierte Kreisringlinien K1-K12 so, daß mindestens 30 % jeder Kreislinie mindestens eine der vorgesehenen Durchbrechungen schneider oder berühren, wobei das Verhältnis der Fläche 23 der Öffnungen der Durchbrechungen 20 durch geeignete Wahl des Durchmessers D zu der gesamten Vorderseitenfläche 24 in einer Relation zwischen 2:100 (Minimum) und 35:100 (Maximum) zu halten ist. Als Optimum ist dabei wohl ein Überdeckungsgrad der Durchbrechungen von 100 % anzusehen, d.h., daß jede denkbare Kreisringlinie K1-K12 mindestens eine Durchbrechung 20 berührt oder schneidet, so daß jeder auf einer beliebigen Kreisringlinie eintretende Wassertropfen einer Durchbrechung zugeführt wird.

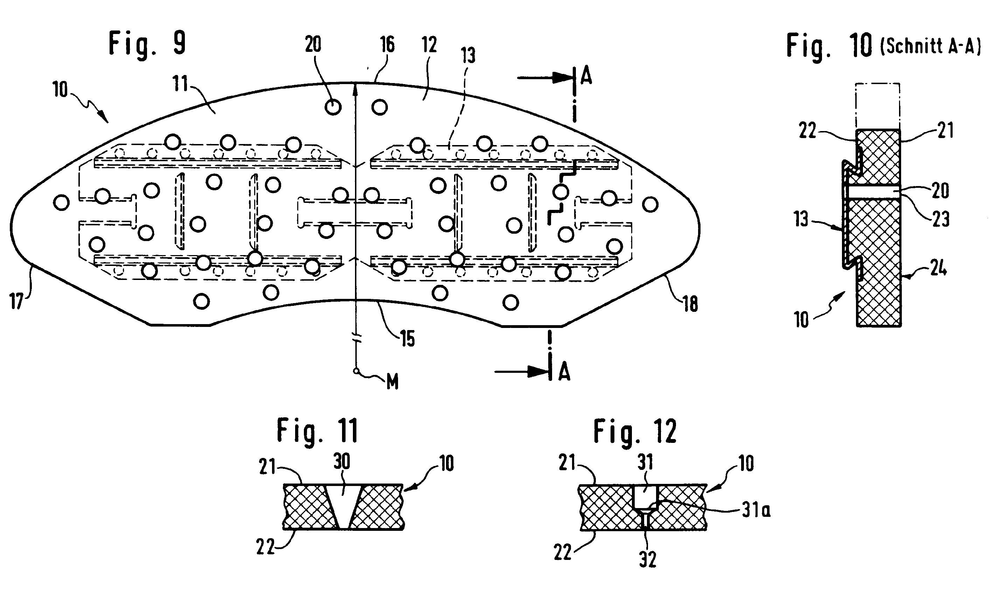

Ein mit entsprechenden Durchbrechungen 20 versehener Bremsbelag 10, der aus den Hälften 11 und 12 besteht und an einer Schwalbenschwanzhalterung 13 angeordnet ist, ist in Fig.9 lediglich als Ausführungsbeispiel dargestellt, wobei hier die Anordnung der Durchbrechungen 20 unter Berücksichtigung eines optimalen Überdekkungsgrades vorgenommen wurde. Wie sich aus der Schnittdarstellung gem. Fig. 10 ergibt, erstreckt sich jede Durchbrechung 20 von der Vorderseite 21 zur Rückseite 22 und durch die Schwalbenschwanzhalterung 13, wobei die Durchbrechung als Durchgangsbohrung mit einem gleichbleibenden Querschnitt 23 ausgebildet ist.

Die Anordnung der Durchbrechungen 20 ist auch bei dieser Ausführungsform so getroffen, daß eine optimale Entwässerung der Vorderseitenfläche 24 erfolgt. Die Durchbrechungen 20 sind dabei auch noch so angeordnet, daß durch die thermoelastische Verformung des Belages durch Rückstellung der entsprechenden Kante eine optimale Anpressung auftritt.

In Fig. 11 ist eine weitere Ausführungsform einer Durchbrechung 30 dargestellt, bei der die Durchbrechung 30 als Konus ausgebildet ist. Der Konus kann dabei, wie in Fig. 11 dargestellt, sich von der Vorderseite 21 zur Rückseite 22 verjüngend angeordnet sein, es ist jedoch eine Ausbildung des Konus so, daß sich dieser von der Vorderseite 21 zur Rückseite 22 erweitert, in vielen Fällen zu bevorzugen. Bei der weiteren in Fig. 12 dargestellten Ausführungsform ist die Durchbrechung 31 als von der Vorderseite 21 eingebrachte Sacklochbohrung mit einem gleichbleibenden Querschnitt ausgebildet, wobei das Sacklochbohrungsende 31a in einen schmaleren Abführungs- und Entlüftungskanal 32 übergeht, der auf der Rückseite 22 des Bremsbelages 10 austritt.

Jedoch sind auch andere geeignete Formen von Durchbrechungen denkbar, und es ist insbesondere dann, wenn in bezug auf den Durchbrechungsquerschnitt eine große Innenoberfläche erreicht werden soll, vorteilhaft, wenn die Durchbrechung einen sternförmigen, elliptischen oder anderen geeigneten Querschnitt aufweist.

## Patentansprüche

1. Bremsbelag (10) für Teilbelagscheibenbremsen mit einer Bremsscheibe, bei dem auf der der Rückseite gegenüberliegenden und für den Kontakt mit der Bremsscheibe der Scheibenbremse vorgesehenen Vorderseite (21) Wasserabführungseinrichtungen vorgesehen sind, wozu der Bremsbelag (10) mit einer Anzahl von jeweils zueinander einen Abstand aufweisenden, sich von der Vorderseite (21) des Bremsbelages (10) bis zu dessen Rückseite (22) durchgehend erstreckenden, zur Aufnahme und Abführung von reibungshindernden Verschmutzungen wie Wasser, Eis, Abrieb od.dgl. geeigneten Durchbrechungen (19;20;30;31) versehen ist,
dadurch gekennzeichnet,
a) daß der Bremsbelag (10) ein- oder mehrteilig (11,12) und etwa kreisringsegmentförmig ausgebildet ist, und
b) daß auf der Vorderseite (21) des Bremsbelages (10) von beliebigen Kreisringlinien (K1-K12) mindestens 30 % jeweils mindestens eine der vorgesehenen Durchbrechungen (20) schneiden oder berühren, und maximal ein Überdeckungsgrad der Durchbrechungen von 150 % besteht, bei dem jede denkbare Kreisringlinie (K1-K12) mindestens eine Durchbrechung (20) berührt oder schneidet, so daß jeder auf einer beliebigen Kreisringlinie eintretende Wassertropfen einer Durchbrechung (20) zugeführt wird, oder
c) daß sich die Fläche (23) der Öffnungen der Durchbrechungen (20) auf der Vorderseite (21) des Bremsbelages (10) zu der gesamten Vorderseitenfläche (24) einschließlich der Fläche (23) der Öffnungen der Durchbrechungen (20) in einer Relation zwischen 2:100 (Minimum) und 35:100 (Maximum) verhält, oder
d) daß auf der Vorderseite (21) des Bremsbelages (10) jede beliebige Kreisringlinie (K1-K12) pro 150 mm Kreislinienlänge mindestens eine Durchbrechung (20) und maximal fünf Durchbrechungen (20) schneidet oder berührt.

2. Bremsbelag nach Anspruch 1,
dadurch gekennzeichnet,
daß mindestens eine Durchbrechung (19) langlochartig und sich in Längsrichtung radial in bezug auf den Kreismittelpunkt (M) des kreisringförmig ausgebildeten Belages (10) erstreckend ausgebildet ist.

3. Bremsbelag nach Anspruch 1,
dadurch gekennzeichnet,
daß die einzelne Durchbrechung (20) jeweils als Durchgangsbohrung mit einem gleichbleibenden Querschnitt bei einem Durchmesser zwischen 6 mm und 30 mm ausgebildet ist.

4. Bremsbelag nach Anspruch 1,
dadurch gekennzeichnet,
daß die einzelne Durchbrechung (31) jeweils als von der Vorderseite (21) eingebrachte Sacklochbohrung mit einem gleichbleibenden Querschnitt bei einem Durchmesser zwischen 6 mm und 30 mm ausgebildet ist, wobei das Sacklochbohrungsende (31a) mit einem gegenüber der Sacklochbohrung (31) schmaleren Abführungs- und Entlüftungskanal (32), der auf der Rückseite (22) des Bremsbelages (10) austritt, verbunden ist.

5. Bremsbelag nach einem der Ansprüche 1 bis 4,
dadurch gekennzeichnet,
daß die einzelne Durchbrechung jeweils einen sternförmigen oder elliptischen Querschnitt aufweist.

6. Bremsbelag nach einem der Ansprüche 1, 2 oder 5,
dadurch gekennzeichnet,
daß die einzelne Durchbrechung (30) jeweils von der Vorderseite (21) zur Rückseite (22) kontinuierlich querschnittsverändert, insbesondere konisch ausgebildet ist.

## Claims

1. Brake lining (10) for partly lined disc brakes having a brake disc, in which, on the front (21) located opposite the rear and provided for the contact with the brake disc of the disc brake, water-evacuating means are provided, for which the brake lining (10) is provided with a plurality of perforations (19;20;30;31) which are in each case spaced apart from each other and extend continuously from the front (21) of the brake lining (10) to the rear (22) of the same and which are suitable for the reception and evacuation of friction-impeding contaminations, such as water, ice, attrition detritus or suchlike,
**characterized** **in** **that**
a) the brake lining (10) is of single-part or multiple-part construction (11,12) and designed so as to be configured approximately like a segment of a circular ring, and
b) in that, on the front (21) of the brake lining (10) of any circular ring line (K1-K12), in each case at least 30% intersect or are tangent to one of the perforations (20) provided and, maximally, a degree of overlap of the perforations of 150% exists, in which each conceivable circular ring line (K1-K12) is tangent to or intersects with at Least one perforation (20), so that each drop pf water entering on any circular ring line is conducted to a perforation (20), or
c) that the area (23) of the openings of the perforations (20) on the front (21) of the brake lining (10), relative to the entire front area (24) inclusive of the area (23) of the openings of the perforations (20), is at a ratio of between 2:100 (minimum) and 35:100) (maximum), or
d) that, on the front (21) of the brake lining (10), any circular ring line (K1-K12) per 150 mm of circular ring line length, intersects with or is tangent to at least one perforation (20) and maximally five perforations (20).

2. Brake lining according to Claim 1,
**characterized** **in** **that**
at least one perforation (19) is constructed in the manner of an elongated hole and so as to extend in the longitudinal direction radially in relation to the centre of the circle (M) of the Lining (10) constructed in the form of a circular ring.

3. Brake lining according to Claim 1,
**characterized** **in** **that**
the individual perforation (20) is in each case constructed in the form of a through bore with a constant cross-section having a diameter of between 6 mm and 30 mm.

4. Brake lining according to Claim 1,
**characterized** **in** **that**
the individual perforation (31) is in each case constructed in the form of a blind end bore drilled into the front (21) and possessing a constant cross-section with a diameter of between 6 mm and 30 mm, in which case the bling bore end (31a) communicates with an evacuation and ventilation duct (32) which is narrower in comparison with the blind end bore (31), which issues at the rear (22) of the brake lining (10).

5. Brake lining according to any of Claims 1 to 4,
**characterized** **in** **that**
the individual perforation (20) possesses in each case a stellate or elliptic cross-section.

6. Brake lining according to any of Claims 1, 2 or 5,
**characterized** **in** **that**
the individual perforation (30) is in each case, from the front (21) to the rear (22), constructed so as to be continuously changed in its cross-section, more particularly so as to be conical.

## Revendications

1. Garniture de frein (10) pour freins à disque à garniture partielle avec un disque de frein dans laquelle des dispositifs d'évacuation de l'eau sont prévus sur le côté avant (21) opposé au côté arrière et qui est prévu pour le contact avec le disque du frein du frein à disque, ce pour quoi la garniture de frein (10) est pourvue d'un certain nombre de découpures (19 ; 20 ; 30 ; 31) qui présentent un écart les unes par rapport aux autres, qui s'étendent de bout en bout du côté avant (21) de la garniture de frein (10) au côté arrière (22) de celle-ci et qui sont appropriées pour recevoir et évacuer des impuretés qui gênent la friction comme l'eau, la glace, l'abrasion ou équivalent,
**caractérisée en ce**
a) que la garniture de frein (10) est configurée en une ou plusieurs parties (11, 12) et est à peu près en forme de segment d'anneau de cercle,
b) qu'au moins 30 % des lignes d'anneau de cercle quelconques (K1-K12) coupent ou touchent sur le côté avant (21) de la garniture de frein (10) au moins l'une des découpures (20) prévues et qu'il y a au maximum un degré de recouvrement des découpures de 150 % pour lequel chaque ligne d'anneau de cercle concevable (K1-K12) touche ou coupe au moins une découpure (20) si bien que chaque goutte d'eau qui apparaît sur une ligne d'anneau de cercle quelconque est amenée à une découpure (20) ou
c) que la surface (23) des ouvertures des découpures (20) sur le côté avant (21) de la garniture de frein (10) se comporte par rapport à l'ensemble de la surface du côté avant (24), y compris la surface (23) des ouvertures des découpures (20), dans un rapport entre 2:100 (minimum) et 35:100 (maximum) ou
d) que chaque ligne d'anneau de cercle (K1-K12) coupe ou touche sur le côté avant (21) de la garniture de frein (10) au moins une découpure (20) et au maximum cinq découpures (20) par 150 mm de longueur de ligne de cercle.

2. Garniture de frein selon la revendication 1,
**caractérisée** **en** **ce**
qu'au moins une découpure (19) est configurée de type oblong et en s'étendant dans le sens longitudinal radialement par rapport au centre du cercle (M) de la garniture (10) configurée en forme d'anneau de cercle.

3. Garniture de frein selon la revendication 1,
**caractérisée** **en** **ce**
que la découpure individuelle (20) est configurée respectivement comme forure de passage avec une section constante pour un diamètre entre 6 mm et 30 mm.

4. Garniture de frein selon la revendication 1,
**caractérisée** **en** **ce**
que la découpure individuelle (31) est configurée respectivement comme forure à trou borgne ménagé à partir du côté avant (21) avec une section constante pour un diamètre entre 6 mm et 30 mm, l'extrémité de la forure à trou borgne (31a) étant reliée à un canal d'évacuation et d'aération (32) plus étroit que la forure à trou borgne (31) qui sort sur le côté arrière (22) de la garniture de frein (10).

5. Garniture de frein selon l'une des revendications 1 à 4,
**caractérisée** **en** **ce**
que la découpure individuelle présente respectivement une section étoilée ou elliptique.

6. Garniture selon l'une des revendications 1, 2 ou 5,
**caractérisée** **en** **ce**
que la découpure individuelle (30) est configurée respectivement avec une section modifiée continuellement du côté avant (21) au côté arrière (22) et qu'elle est en particulier conique.
